# EUROPEAN PATENT APPLICATION

(11) **EP 4 502 331 A1**
(43) Date of publication of application: **05.02.2025**
(21) Application number: 23776816.3
(22) Date of filing: 14.03.2023
(51) Int. Cl.: E05F 15/77, B60J 1/12, B60J 5/04, B60J 5/10, E05B 49/00

(54) **METHOD FOR OPERATING OPENING/CLOSING MEMBER OF VEHICLE, AND VEHICLE**

(30) Priority: 31.03.2022 CN 202210337330
(71) Applicant: NISSAN MOTOR CO., LTD., Yokohama-shi, Kanagawa 221-0023 (JP); RENAULT S.A.S., 92100 Boulogne-Billancourt (FR)
(72) Inventor: ZHANG, Xuejun, Shanghai 200031 (CN)
(74) Representative: Osha BWB
(86) International application number: PCT/IB2023/000126
(87) International publication number: WO 2023/187465

(57) **Abstract**

At least one embodiment of the present disclosure provides a method for operating an opening/closing member of a vehicle and the vehicle for implementing the method. The method includes the steps of: determining whether a first mobile terminal is within a predetermined spatial range relative to an opening/closing member; determining, by a second mobile terminal, whether the second mobile terminal remains stationary for a first predetermined period based on a signal of a sensor from the second mobile terminal; when determining that the second mobile terminal remains stationary for the first predetermined period, transmitting, by the second mobile terminal, first stationary behavior information to the vehicle; and when the vehicle receives the first stationary behavior information from the second mobile terminal, switching the opening/closing member from a first state to a second state.

## Description

### Technical Field

An embodiment of the present disclosure provides a method for operating an opening/closing member of a vehicle, and the vehicle.

This application claims priority to Chinese Patent Application No. 202210337330.4, filed on March 31, 2022, and for designated countries that allow incorporation by reference, the entire contents of which are incorporated herein by reference and made a part of the description of this application.

### Background Art

In order to open and close opening/closing members such as front doors, rear doors, trunks, and vehicle windows, it is necessary to initiate opening/closing commands to the opening/closing members of a vehicle. By pressing a specific button serving as a key of the vehicle, kicking a specific part of the vehicle with a foot, or making a specific gesture, an opening/closing command can be initiated to an opening/closing member of the vehicle. However, it may be difficult for one to perform such an operation with a heavy load carried or with both hands occupied. In addition, some methods for initiating an opening/closing command to an opening/closing member of a vehicle further have defects such as complicated procedures, high learning costs, and low reliability.

### Summary of Invention

### Problems to Be Solved by Invention

Therefore, there is a need to provide a method for operating an opening/closing member of a vehicle that allows a simple operation by a user, is easy to learn, is reliable, and is low cost.

### Means for Solving Problems

At least one embodiment of the present disclosure provides a method for operating an opening/closing member of a vehicle, the method including the steps of: determining whether a first mobile terminal is within a predetermined spatial range relative to an opening/closing member; determining, by a second mobile terminal, whether the second mobile terminal remains stationary for a first predetermined period based on a signal of a sensor from the second mobile terminal; when the second mobile terminal is determined to remain stationary for the first predetermined period, transmitting, by the second mobile terminal, first stationary behavior information to the vehicle; and when the vehicle receives the first stationary behavior information from the second mobile terminal, switching the opening/closing member from a first state to a second state. The first state is one of an open state and a closed state, and the second state is the other of the open state and the closed state.

For example, in some embodiments, the sensor is a motion sensor and is one selected from the group consisting of an acceleration sensor, an angular velocity sensor, and a magnetometer.

For example, in some embodiments, the method further includes the steps of: when determining that the first mobile terminal is within the predetermined spatial range relative to the opening/closing member, determining, by the second mobile terminal, whether the second mobile terminal remains stationary for a second predetermined period which is shorter than the first predetermined period based on a signal of the sensor from the second mobile terminal; when determining that the second mobile terminal remains stationary for the second predetermined period, transmitting, by the second mobile terminal, second stationary behavior information to the vehicle; and when the vehicle receives the second stationary behavior information, transmitting a warning signal indicating to switch the opening/closing member from the first state to the second state. The warning signal being transmitted notifies the user of the vehicle that a door or trunk is to be opened or closed.

For example, in some embodiments, the warning signal is transmitted by at least one of the vehicle, the first mobile terminal, or the second mobile terminal.

For example, in some embodiments, the method further includes a step of, when the vehicle does not receive the first stationary behavior information within a predetermined period after receiving the second stationary behavior information, stopping transmission of the warning signal and maintaining the opening/closing member in the first state. If the user of the vehicle stays near the vehicle for a predetermined period but does not wish to open a door or trunk, the automatic opening/closing operation on the door or trunk can be cancelled by cancelling the stationary state after the user observes the warning signal.

For example, in some embodiments, when the first state is an open state, the second predetermined period is a second open predetermined period, and when the first state is a closed state, the second predetermined period is a second closed predetermined period. The second open predetermined period is shorter than the second closed predetermined period.

For example, in some embodiments, when the first state is an open state, a difference between the first predetermined period and the second predetermined period is a third open predetermined period, and when the first state is a closed state, a difference between the first predetermined period and the second predetermined period is a third closed predetermined period. The third open predetermined period is shorter than the third closed predetermined period.

For example, in some embodiments, the first mobile terminal and the second mobile terminal are a same mobile terminal.

For example, in some embodiments, the first mobile terminal and the second mobile terminal are each a mobile phone or a key of the vehicle.

For example, in some embodiments, the first mobile terminal and the second mobile terminal are different mobile terminals.

For example, in some embodiments, the first mobile terminal is a key of the vehicle, and the second mobile terminal is a mobile phone, the mobile phone wirelessly communicating with the vehicle.

For example, in some embodiments, the predetermined spatial range includes a spatial range of a predetermined distance from the vehicle and a spatial range inside the vehicle. Accordingly, the door will automatically open when the key of the vehicle or the mobile phone is accidentally dropped inside the vehicle, making it possible to prevent inconvenience.

For example, in some embodiments, the opening/closing member includes at least one of a front door, a rear door, a trunk, and a vehicle window.

At least one embodiment of the present disclosure provides a vehicle, the vehicle including an opening/closing member and a controller, the controller being configured to: determine whether a first mobile terminal is within a predetermined spatial range relative to the opening/closing member; transmit, to a second mobile terminal, position confirmation information for confirming that the first mobile terminal is within the predetermined spatial range relative to the opening/closing member; receive, from the second mobile terminal, first stationary behavior information indicating that the second mobile terminal remains stationary for a first predetermined period; and switch the opening/closing member from a first state to a second state in response to the first stationary behavior information received from the second mobile terminal. The first state is one of an open state and a closed state, and the second state is the other of the open state and the closed state.

For example, in some embodiments, the vehicle further includes a vehicle-side warning device, and the controller is further configured to: receive, from the second mobile terminal, second stationary behavior information indicating that the second mobile terminal remains stationary for a second predetermined period which is shorter than the first predetermined period; and cause the vehicle-side warning device to transmit a warning signal indicating to switch the opening/closing member from the first state to the second state in response to the second stationary behavior information received from the second mobile terminal.

For example, in some embodiments, the predetermined spatial range includes a spatial range of a predetermined distance from the vehicle and a spatial range inside the vehicle.

For example, in some embodiments, the first mobile terminal and the second mobile terminal are each one selected from among a key of the vehicle and a mobile phone.

For example, in some embodiments, the opening/closing member includes at least one of a front door, a rear door, a trunk, and a vehicle window.

### Effects of Invention

According to the present invention, without requiring any movement or posture by the user, especially with both hands occupied, the vehicle determines whether or not a door, a trunk, or the like, needs to be opened based on sensing the user being in a stationary state by means of a key of the vehicle or a mobile phone held by the user, thereby facilitating use of the vehicle.

In addition, by sensing the state of the user by using a sensor built into a mobile terminal carried by the user, such as a mobile phone or a key of the vehicle, the user's information can be grasped more accurately and in a timely manner and transmitted to the vehicle. Compared to vehicle-based polling methods, costs are saved and detection speed and accuracy are improved.

In order to more clearly explain the technical solutions of the embodiments of the present disclosure, the following drawings only show some embodiments of the present disclosure to briefly describe and understand the drawings required for use in the embodiments below, and therefore should not be regarded as limiting the scope of protection, and those skilled in the art can further obtain other related drawings based on these drawings without requiring any creative work.

### Brief Description of Drawings

FIG. 1 is a schematic diagram of a vehicle system according to one embodiment of the present disclosure.
FIG. 2 is a flowchart of a method for operating an opening/closing member of a vehicle, according to one embodiment of the present disclosure.
FIG. 3 is a flowchart of a method for operating an opening/closing member of a vehicle, according to another embodiment of the present disclosure.
FIG. 4 is a flowchart of a method for operating an opening/closing member, performed by a controller of a vehicle, according to one embodiment of the present disclosure.
FIG. 5 is a schematic diagram of a vehicle system according to another embodiment of the present disclosure.

### Mode(s) for Carrying out the Invention

In order to make an object, technical solutions, and advantages of embodiments of the present disclosure clearer, the technical solutions of the embodiments of the present disclosure will be clearly and completely described below with reference to the drawings of the embodiments of the present disclosure. Apparently, the embodiments to be described are some embodiments of the present disclosure, but not all embodiments. Based on the embodiments of the present disclosure to be described, all other embodiments that those skilled in the art can obtain without requiring any creative work fall within the scope of protection of the present disclosure.

Unless otherwise defined, technical or scientific terms used in the present disclosure have the common meanings that can be appreciated by those skilled in the art. The terms "first" and "second", and similar terms as used in the present disclosure do not denote any order, number, or importance, but are merely used to distinguish between different components. Similar terms such as "includes" or "comprises" are intended to mean that an element or a component described before such a term include elements or components listed after the term, and equivalents thereof, and do not exclude other elements or components.

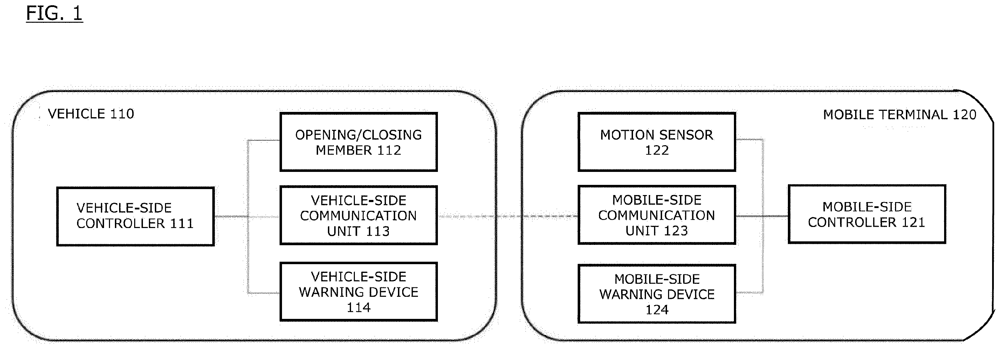

FIG. 1 is a schematic diagram of a vehicle system according to one embodiment of the present disclosure.

As illustrated in FIG. 1, the vehicle system includes a vehicle 110 and a mobile terminal 120.

The vehicle 110 includes an opening/closing member 112, a vehicle-side communication unit 113, a vehicle-side warning device 114, and a vehicle-side controller 111. The opening/closing member 112 may include at least one of a pair of front doors, a pair of rear doors, a plurality of car windows, a trunk, etc., but the present invention is not limited to including any of these. The vehicle-side communication unit 113 is configured to interact with a mobile terminal and may include at least one of a low-frequency communication antenna, a Bluetooth (registered trademark) antenna, a ultra-wideband (UWB) communication antenna, an ultra-high frequency (UHF) communication antenna, a 2G/3G/4G/5G mobile communication antenna, a WIFI antenna, etc. The vehicle-side warning device 114 is configured to transmit a warning signal to a user and may include, for example, vehicle lights, a horn, a speaker, etc. A warning signal can be transmitted to the user by flashing the vehicle lights. The horn can transmit a warning signal to the user by honking the horn. The speaker can communicate warning signals to the user by playing a voice prompt. The vehicle-side controller 111 is communicatively connected to the opening/closing member 112, the vehicle-side communication unit 113, and the vehicle-side warning device 114, to transmit signals to these members or receive signals from these members. The vehicle-side controller 111 may be a vehicle electronic control unit or a separate controller, and the present invention is not limited thereto.

The mobile terminal 120 includes a motion sensor 122, a mobile-side communication unit 123, a mobile-side warning device 124, and a mobile-side controller 121. The motion sensor 122 is configured to sense whether the mobile terminal 120 is in a stationary state, and may include, for example, at least one of an acceleration sensor, an angular velocity sensor, and a magnetometer. The acceleration sensor can detect whether the mobile terminal 120 is in a stationary state, based on an acceleration level of the mobile terminal 120. Specifically, when the mobile terminal 120 is in the stationary state, the change in acceleration is typically zero, while when the mobile terminal 120 is moving, the mobile terminal 120 has a certain acceleration, and the value of the acceleration changes over time. The acceleration sensor is used to continuously acquire the acceleration values of the mobile terminal 120 at a constant frequency, and when the changes in the acceleration values on the respective three axes within a certain range of time are all less than a predetermined threshold, the motion sensor 122 can determine that the mobile terminal 120 is in the stationary state within that range of time. The angular velocity sensor can detect whether the mobile terminal 120 is in a stationary state, based on an angular velocity level of the mobile terminal 120. Specifically, when the mobile terminal 120 is in the stationary state, the change in angular velocity is typically zero, while when the mobile terminal 120 is moving, the mobile terminal 120 has a certain angular velocity, and the value of the angular velocity changes over time. The angular velocity sensor is used to continuously acquire the angular velocity values of the mobile terminal 120 at a constant frequency, and when the changes in the angular velocity values on the respective three axes within a certain range of time are all less than a predetermined threshold, the motion sensor 122 can determine that the mobile terminal 120 is in the stationary state within that range of time. The magnetometer can detect whether the mobile terminal 120 is in a stationary state, based on a magnetic field strength level of the mobile terminal 120. Specifically, when the mobile terminal 120 is in the stationary state, the change in magnetic field strength is typically zero, while when the mobile terminal 120 is moving, the mobile terminal 120 has a certain magnetic field strength, and the value of the magnetic field strength changes over time. The magnetometer is used to continuously acquire the magnetic field strength values of the mobile terminal 120 at a constant frequency, and when the changes in the magnetic field strength values on the respective three axes within a certain range of time are all less than a predetermined threshold, the motion sensor 122 can determine that the mobile terminal 120 is in the stationary state within that range of time. The mobile-side warning device 124 is configured to transmit a warning signal to the user and may include, for example, a buzzer and a lamp for transmitting an audible warning signal and a visual warning signal, respectively, to the user. The mobile-side controller 121 is communicatively connected to the mobile-side communication unit 123, the motion sensor 122, and the mobile-side warning device 124, to transmit signals to these members or receive signals from these members. The mobile-side controller 121 may include a processing device such as a microprocessor, and a storage device. Corresponding to the vehicle-side communication unit 113, the mobile-side communication unit 123 may include at least one of a low-frequency communication antenna, a Bluetooth (registered trademark) antenna, a UWB communication antenna, a UHF communication antenna, a 2G/3G/4G/5G mobile communication antenna, and a WIFI antenna, etc. The vehicle 110 and the mobile terminal 120 can communicate and authenticate with each other via the vehicle-side communication unit 113 and the mobile-side communication unit 123. The vehicle-side communication unit 113 can also determine the position of the mobile terminal 120 based on communication with the mobile-side communication unit 123, such as low-frequency communication antennas, Bluetooth (registered trademark) antennas, or UWB antennas, which are mounted at a plurality of different positions on the vehicle 110.

The mobile terminal 120 may be an easily portable mobile terminal such as a key of the vehicle, a mobile phone, or a tablet computer.

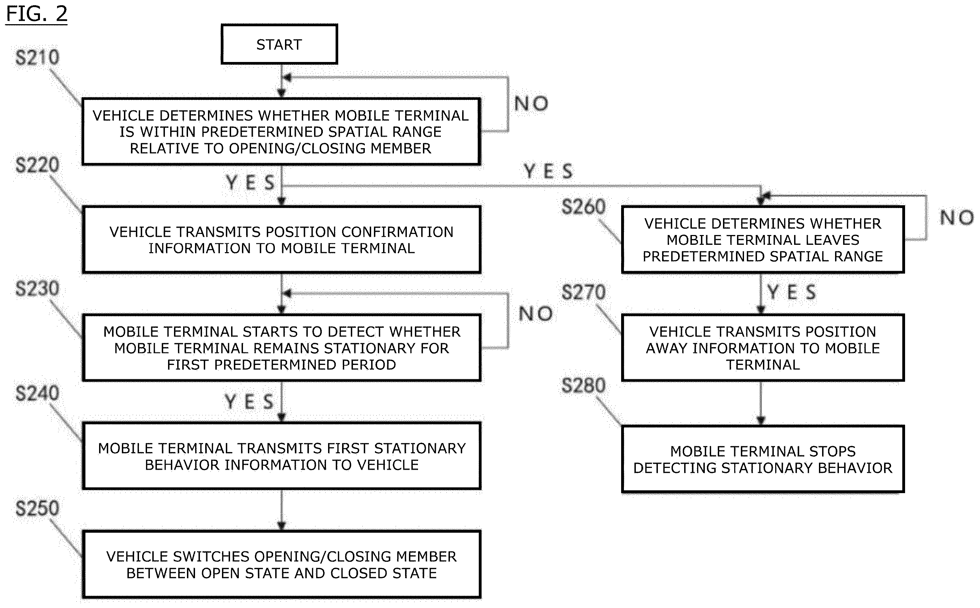

FIG. 2 is a flowchart of a method for operating the opening/closing member 112 of the vehicle 110, according to one embodiment of the present disclosure. The method may be performed, for example, by the vehicle system illustrated in FIG. 1. In particular, the mobile terminal 120 of the vehicle system is a key of the vehicle. However, in other embodiments, the key of the vehicle may be another type of mobile terminal 120, such as a mobile phone, and the present disclosure is not limited thereto.

As illustrated in FIG. 2, in step S210, the vehicle 110 determines whether the mobile terminal 120 is within a predetermined spatial range relative to the opening/closing member 112. For example, the vehicle 110 can transmit a low-frequency wake-up signal to the mobile terminal 120 via a vehicle-side low-frequency communication antenna. The vehicle 110 can interact with the mobile-side low-frequency communication antenna of the mobile terminal 120 via low-frequency wake-up signals transmitted from a plurality of vehicle-side low-frequency communication antennas to confirm the position of the mobile terminal 120, that is, to confirm whether the mobile terminal 120 is within a predetermined range relative to the opening/closing member 112.

If the vehicle 110 determines that the mobile terminal 120 is within a predetermined spatial range relative to the opening/closing member 112, the vehicle 110 transmits, to the mobile terminal 120, then in step S220, position confirmation information indicating that the mobile terminal 120 is within the predetermined spatial range relative to the opening/closing member 112.

For example, the vehicle 110 can transmit the position confirmation information to the mobile terminal 120 through a low-frequency antenna. Further, for example, the vehicle 110 can transmit the position confirmation information together with vehicle-side authentication information to the mobile terminal 120 to wake up the mobile terminal 120.

When receiving the position confirmation information, then in step S230, the mobile terminal 120 starts to detect whether the mobile terminal 120 remains stationary for a first predetermined period.

For example, when receiving the confirmation information from the vehicle 110, the mobile terminal 120 starts to detect using the motion sensor 122 whether the mobile terminal 120 remains stationary for a first predetermined period.

Further, for example, when the vehicle 110 transmits the position confirmation information together with vehicle-side authentication information to the mobile terminal 120 to wake up the mobile terminal 120, the mobile terminal 120 receives the position confirmation information and the accurate vehicle-side authentication information, authenticates the vehicle 110, and then starts to detect stationary behavior. The mobile terminal 120 can transmit mobile-side authentication information to the vehicle 110 via a Bluetooth antenna or a UHF antenna.

If the mobile terminal 120 determines that the mobile terminal 120 remains stationary for the first predetermined period, then in step S240, the mobile terminal 120 transmits first stationary behavior information to the vehicle 110.

For example, the mobile terminal 120 can transmit the first stationary behavior information to the vehicle 110 via a Bluetooth antenna, a UHF antenna, or the like.

When the vehicle 110 receives the first stationary behavior information from the mobile terminal 120, then in step S250, the vehicle 110 switches the opening/closing member 112 between an open state and a closed state.

For example, if the opening/closing member 112 is in the open state, the vehicle 110 closes the opening/closing member 112 after receiving the first stationary behavior information. For example, if the opening/closing member 112 is in the closed state, the vehicle 110 opens the opening/closing member 112 after receiving the first stationary behavior information.

In one example, the opening/closing member 112 is a trunk, the predetermined spatial range is a spatial range within a predetermined distance from a place external to the vehicle 110 to the trunk, and the opening/closing member 112 is in the closed state. Since the user typically carries the mobile terminal 120 in a clothing pocket or with the hand to hold it, the mobile terminal 120 remaining stationary for the first predetermined period means that the user remains stationary for the first predetermined period. In step S250, the vehicle 110 opens the trunk after receiving first stationary behavior information indicating that the user remains stationary for the first predetermined period.

In one example, the opening/closing member 112 is a trunk, the predetermined spatial range is a spatial range within a predetermined distance from a place external to the vehicle 110 to the trunk, and the opening/closing member 112 is in the open state. The mobile terminal 120 remaining stationary for the first predetermined period means that the user remains stationary for the first predetermined period. In step S250, the vehicle 110 closes the trunk after receiving first stationary behavior information indicating that the user remains stationary for the first predetermined period.

Thus, the method can switch the opening/closing member 112 between the open state and the closed state by the user simply remaining stationary within the predetermined spatial range relative to the opening/closing member 112 for the first predetermined period. The user is allowed to operate the opening/closing member 112 simply and easily without requiring a high learning cost. The user is also allowed to operate the opening/closing member 112 even when carrying heavy luggage or when both hands are occupied. The method also detects whether the user is stationary by using a sensor in the mobile terminal 120 that can be carried by the user. Compared to other methods for detecting whether the user is stationary, the method provides higher accuracy, higher sensitivity, lower false positive rate, and lower cost. For example, it reduces the chances of detecting that the user is stationary even though the user is moving, and of false positives where the user is not detected as stationary. Furthermore, the method can be implemented without modifying the vehicle 110, by simply modifying the mobile terminal 120, thereby reducing hardware costs.

In one example, the opening/closing member 112 is a trunk, the predetermined spatial range is a spatial range within a predetermined distance from a place internal to the vehicle 110 to the trunk, and the opening/closing member 112 is in the closed state. In such a case, the mobile terminal 120 remaining stationary for the first predetermined period may mean that the key has been left inside the trunk. In step S250, the vehicle 110 opens the trunk after receiving first stationary behavior information indicating that the key of the vehicle has been left inside the trunk.

By limiting the predetermined spatial range to the spatial range inside the vehicle 110, the opening/closing member 112 can be automatically opened when the mobile terminal 120 such as the key of the vehicle has been left inside the vehicle 110. An awkward situation of the mobile terminal 120 being locked up in the vehicle 110 is avoided.

Further, as illustrated in FIG. 2, the method further includes steps S260, S270, and S280. If the vehicle 110 determines that the mobile terminal 120 is within the predetermined spatial range relative to the opening/closing member 112, then in step S260, the vehicle 110 determines whether the mobile terminal 120 leaves the predetermined spatial range. If the vehicle 110 determines that the mobile terminal 120 leaves the predetermined spatial range, then in step S270, the vehicle 110 transmits position away information to the mobile terminal 120. When the mobile terminal 120 receives the position away information, then in step S280, the mobile terminal 120 stops detecting stationary behavior.

Further, in one example, when the mobile terminal 120 starts to detect stationary behavior after receiving the position confirmation information, the mobile terminal 120 can also start timing. After a maximum predetermined detection period (e.g., 10 minutes) has elapsed since starting to detect stationary behavior, the mobile terminal 120 stops detecting the stationary behavior. Since the mobile terminal 120 does not receive the position away information from the vehicle 110, a situation in which the mobile terminal 120 continues to detect stationary behavior and thus wastes the remaining battery power of the mobile terminal 120 is avoided.

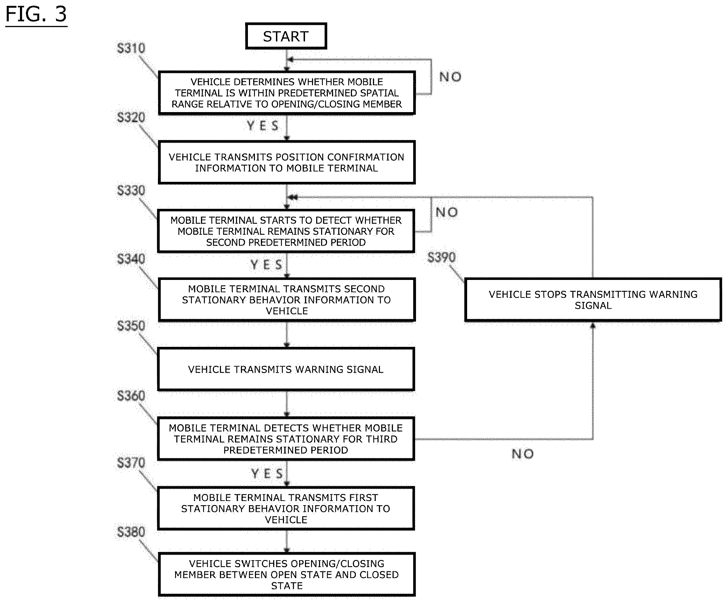

FIG. 3 is a flowchart of a method for operating the opening/closing member 112 of the vehicle 110, according to another embodiment of the present disclosure. The method may be performed, for example, by the vehicle system illustrated in FIG. 1. In particular, the mobile terminal 120 of the vehicle system is a key of the vehicle. For the sake of brevity, the description of steps that are the same as or similar to those in the method illustrated in FIG. 2 will be omitted.

As illustrated in FIG. 3, in step S310, the vehicle 110 determines whether the mobile terminal 120 is within a predetermined spatial range relative to the opening/closing member 112.

If the vehicle 110 determines that the mobile terminal 120 is within a predetermined spatial range relative to the opening/closing member 112, the vehicle 110 transmits, to the mobile terminal 120, then in step S320, position confirmation information indicating that the mobile terminal 120 is within the predetermined spatial range relative to the opening/closing member 112.

When the position confirmation information is received, then in step S330, the mobile terminal 120 starts to detect whether the mobile terminal 120 remains stationary for a second predetermined period.

If the mobile terminal 120 determines that the mobile terminal 120 remains stationary for the second predetermined period, then in step S340, the mobile terminal 120 transmits second stationary behavior information to the vehicle 110.

For example, the mobile terminal 120 can transmit the second stationary behavior information to the vehicle 110 via a Bluetooth antenna, a UHF antenna, or the like.

When the vehicle 110 receives the second stationary behavior information from the mobile terminal 120, then in step S350, the vehicle 110 transmits, to the user, a warning signal indicating that the state of the opening/closing member is to be switched. For example, the warning signal transmitted by the vehicle 110 may include a warning signal such as flashing vehicle lights, honking the horn, or a voice prompt through a speaker.

Further, in step S360, the mobile terminal 120 continues to detect whether the mobile terminal 120 remains stationary for a third predetermined period.

If the mobile terminal 120 detects that the mobile terminal 120 continues to be stationary for the third predetermined period, then in step S370, the mobile terminal 120 transmits the first stationary behavior information to the vehicle 110. Here, the third predetermined period may be understood as a difference between the first predetermined period and the second predetermined period. That is, in step S370, when the mobile terminal 120 detects that the mobile terminal 120 remains stationary for the first predetermined period, the mobile terminal 120 transmits the first stationary behavior information.

When the vehicle 110 receives the first stationary behavior information within the predetermined period, then in step S380, the vehicle 110 switches the opening/closing member 112 between the open state and the closed state.

When the mobile terminal 120 does not detect that the mobile terminal 120 remains stationary for the third predetermined period, that is, when the vehicle 110 does not receive the first stationary behavior information within the predetermined period, then in step S390, the vehicle 110 stops transmitting the warning signal and returns to step S330, where the mobile terminal 120 restarts to detect the stationary behavior of the mobile terminal 120.

The user may unintentionally remain stationary within the predetermined spatial range. To prevent switching of the opening/closing member 112 from being triggered by such unintentional stationary, the method further includes a step of transmitting a warning signal to the user before switching the state of the opening/closing member 112. When the user remains stationary within the predetermined spatial range for the second predetermined period, the mobile terminal 120 transmits the second stationary behavior information to the vehicle 110, and when the vehicle 110 receives the second stationary behavior information, the vehicle 110 transmits, to the user, a warning signal indicating that the state of the opening/closing member 112 is to be switched. In response to receiving the warning signal, when the user continues to remain stationary, the user is allowed to transmit, to the vehicle, a command to switch the state of the opening/closing member, or when the user moves, the user is allowed to transmit, to the vehicle, a command not to switch the state of the opening/closing member.

Further in step S350, as a complement and alternative to the vehicle 110 transmitting the warning signal, the warning signal may be transmitted by the mobile terminal 120. The warning signal transmitted by the mobile terminal 120 may include an audible or visual warning signal, such as a transmitted beep or flash. Since the mobile terminal 120 is typically carried by the user, in certain cases, the warning signal transmitted by the mobile terminal 120 is more likely to be noticed by the user. When the vehicle 110 and the mobile terminal 120 transmit warning signals simultaneously, a typical redundancy scheme is used to prevent the warning signal from going unnoticed by the user.

Rationally setting the second predetermined period and the third predetermined period makes it possible to accurately determine the user's intention, avoid erroneous determination, shorten the user's waiting time, and improve the sensitivity of the system.

When the opening/closing member 112 is in the open state, the second predetermined period is a second open predetermined period. When the opening/closing member 112 is in the closed state, the second predetermined period is a second closed predetermined period. When the opening/closing member 112 is in the open state, the third predetermined period is a third open predetermined period, and when the opening/closing member 112 is in the closed state, the third predetermined period is a third closed predetermined period.

In one example, the second open predetermined period may be shorter than the second closed predetermined period. For example, the second open predetermined period is set to 2.5 seconds, and the second closed predetermined period is set to 3 seconds. For example, when the opening/closing member 112 as a trunk is in the open state, the user is usually busy sorting out the user's belongings. Therefore, when the opening/closing member 112 is in the open state, the user is unlikely to take a stationary behavior and the time for that state is short, compared to when the opening/closing member 112 is in the closed state. Therefore, by setting the second open predetermined period to be shorter than the second closed predetermined period, the sensitivity for determining whether the user takes a stationary behavior is improved, the time the user waits for the switching is shortened, and the user experience is improved.

In one example, the third open predetermined period may be shorter than the third closed predetermined period. For example, the third open predetermined period is set to 2 seconds, and the third closed predetermined period is set to 4 seconds. For example, when the opening/closing member 112 as a trunk is in the open state, the user is likely to intend to close the opening/closing member 112, and thus can immediately be aware of and react to the trunk being about to be closed after seeing the warning signal. Therefore, by setting the third open predetermined period to be shorter than the third closed predetermined period, the sensitivity for determining whether the user takes a stationary behavior is improved, the time the user waits for the switching is shortened, and the user experience is improved.

In another example, the second open predetermined period may be longer than the second closed predetermined period. For example, when the opening/closing member 112 as a trunk is in the open state, the user is usually busy sorting out the user's belongings. The user may not carry the mobile terminal 120 but may place the mobile terminal 120 inside the opening/closing member 112 or in a fixed installation. At this time, the mobile terminal 120 is stationary and accordingly will erroneously trigger to switch the opening/closing member 112 to the closed state. Therefore, by setting the second open predetermined period to be longer than the second closed predetermined period, erroneous operation of the opening/closing member 112 is avoided.

In another example, the third open predetermined period may be longer than the third closed predetermined period. Therefore, for example, when the opening/closing member 112 as a trunk is in the open state and is about to be closed, the user can be given sufficient time to check whether an item has been left inside the opening/closing member 112. In addition, during the third open predetermined period, the vehicle 110 can warn the user through a voice prompt to ensure that no items are left behind.

Further, when the predetermined spatial range is outside the opening/closing member 112, the second predetermined period is a second outside predetermined period, and the third predetermined period is a third outside predetermined period. When the predetermined spatial range is inside the opening/closing member 112, the second predetermined period is a second inside predetermined period, and the third predetermined period is a third inside predetermined period.

In one example, the second outside predetermined period may be shorter than the second inside predetermined period, and the third outside predetermined period may be shorter than the third inside predetermined period. For example, the second inside predetermined period is set to 30 seconds, and the third inside predetermined period is set to 10 seconds. Since the situation where the key has been left inside the opening/closing member 112 does not always occur, the user's waiting time is set longer to avoid erroneous determination and improve the accuracy of determining the user's intention.

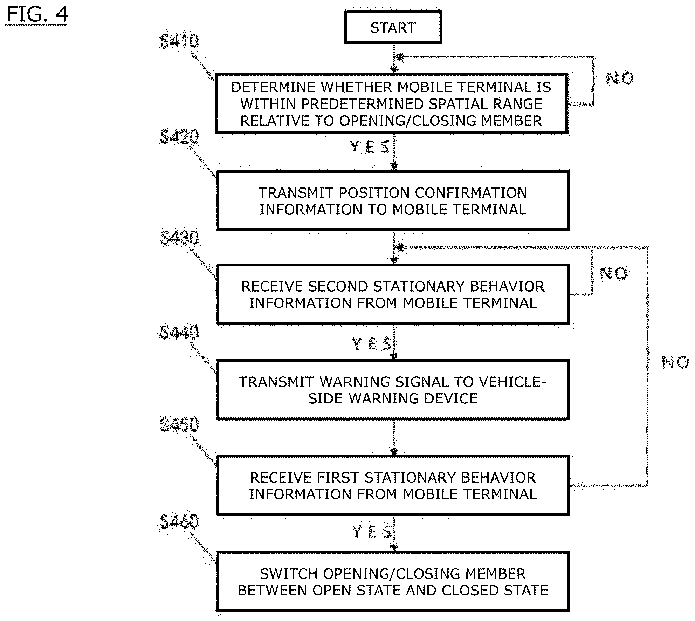

FIG. 4 illustrate a method for operating the opening/closing member 112 performed by the controller of the vehicle 110, according to an embodiment of the present disclosure.

As illustrated in FIG. 4, the method includes a step S410 in which the vehicle-side communication unit 113 interacts with the mobile-side communication unit 123 to determine whether the mobile terminal 120 is within a predetermined spatial range relative to the opening/closing member 112.

If the mobile terminal 120 is determined to be within the predetermined spatial range relative to the opening/closing member 112, then in step S420, the vehicle 110 transmits position confirmation information to the mobile terminal 120.

When the position confirmation information is transmitted, then in step S430, the vehicle 110 continues to monitor second stationary behavior information from the mobile terminal 120 and receives the second stationary behavior information from the mobile terminal 120, the second stationary behavior information indicating that the mobile terminal 120 remains stationary for a second predetermined period.

When the second stationary behavior information is received, then in step S440, the vehicle 110 causes the vehicle-side warning device 114 to transmit a warning signal indicating that the state of the opening/closing member 112 is to be switched.

Further, when the second stationary behavior information is received, then in step S450, the vehicle 110 continues to monitor first stationary behavior information from the mobile terminal 120 and receives the first stationary behavior information from the mobile terminal 120, the first stationary behavior information indicating that the mobile terminal 120 remains stationary for a first predetermined period.

When the vehicle 110 does not receive the first stationary behavior information within a predetermined period, the processing returns to step S430, and then the vehicle 110 continues to monitor the second stationary behavior information from the mobile terminal 120.

When the first stationary behavior information is received, then in step S460, the vehicle 110 switches the opening/closing member 112 between an open state and a closed state.

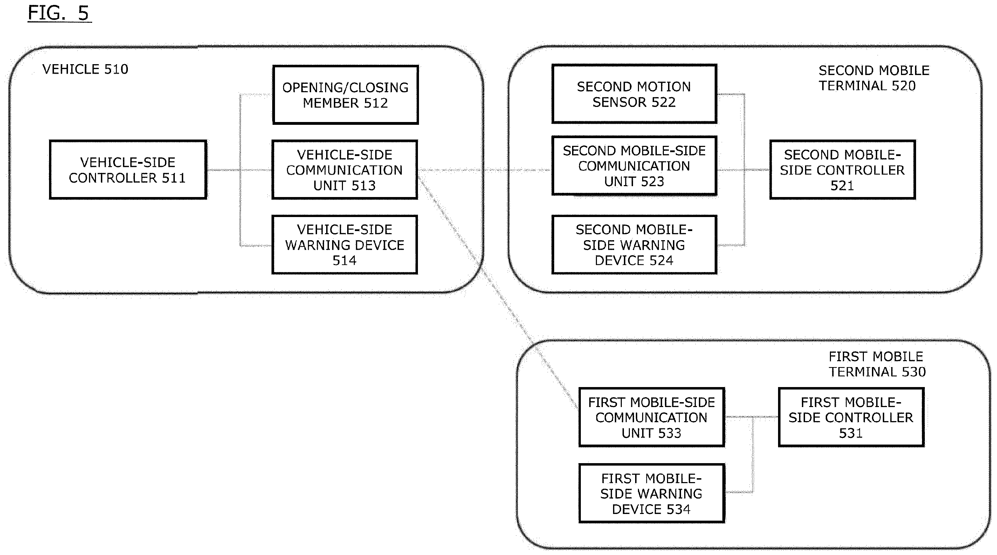

FIG. 5 is a schematic diagram of a vehicle system according to another embodiment of the present disclosure. For the sake of brevity, the description of steps that are the same as or similar to those in the system illustrated in FIG. 1 will be omitted.

A difference from the system illustrated in FIG. 1 is that the vehicle system includes a first mobile terminal 530 and a second mobile terminal 520 in addition to a vehicle. For example, the first mobile terminal 530 may be a key of the vehicle, and the second mobile terminal 520 may be a mobile phone.

Similar to the system illustrated in FIG. 1, the vehicle 510 includes an opening/closing member 512, a vehicle-side communication unit 513, a vehicle-side warning device 514, and a vehicle-side controller 511.

The first mobile terminal 530 includes a first mobile-side communication unit 533, a first mobile-side warning device 534, and a first mobile-side controller 531. The first mobile-side communication unit 533 communicates with the vehicle-side communication unit 513 and may include a plurality of low-frequency communication antennas, a plurality of Bluetooth (registered trademark) antennas, or a plurality of UWB communication antennas. The vehicle-side communication unit 513 can determine the position of the first mobile terminal 530 by interacting with the first mobile-side communication unit 533. The first mobile-side warning device 534 is configured to transmit a warning signal to the user. The first mobile-side controller 531 is communicatively connected to the first mobile-side communication unit 533 and the first mobile-side warning device 534, to transmit signals to these members or receive signals from these members.

The second mobile terminal 520 includes a second motion sensor 522, a second mobile-side communication unit 523, a second mobile-side warning device 524, and a second mobile-side controller 521. The second motion sensor 522 is configured to sense whether the second mobile terminal 520 is in a stationary state, and may include, for example, at least one of an acceleration sensor, an angular velocity sensor, and a magnetometer. The second mobile-side warning device 524 is configured to transmit a warning signal to the user. The second mobile-side communication unit 523 communicates with the vehicle-side communication unit 513 and may include at least one of a Bluetooth (registered trademark) antenna, a UWB communication antenna, a UHF communication antenna, a 2G/3G/4G/5G mobile communication antenna, a WIFI antenna, etc. The second mobile-side controller 521 is communicatively connected to the second mobile-side communication unit 523, the second motion sensor 522, and the second mobile-side warning device 524, to transmit signals to these members or receive signals from these members.

The vehicle system illustrated in FIG. 5 can be used to perform the methods illustrated in FIGS. 2 and 3, or the vehicle 510 illustrated in FIG. 5 can be used to perform the method illustrated in FIG. 4.

As illustrated in FIG. 2, for example, in step S210, the vehicle 510 determines whether the first mobile terminal 530 is within a predetermined spatial range relative to the opening/closing member 512. In step S220, the vehicle 510 transmits, to the second mobile terminal 520, position confirmation information indicating that the first mobile terminal 530 is within the predetermined spatial range relative to the opening/closing member 512. When the second mobile terminal 520 receives the position confirmation information, then in step S230, the second mobile terminal 520 starts to detect whether the second mobile terminal 520 remains stationary for a first predetermined period. In step S240, the second mobile terminal 520 transmits first stationary behavior information to the vehicle 510. In step S260, the vehicle 510 determines whether the first mobile terminal 530 leaves the predetermined spatial range. In step S270, the vehicle 510 transmits position away information to the second mobile terminal 520. When the second mobile terminal 520 receives the position away information, then in step S280, the second mobile terminal 520 stops detecting stationary behavior.

As illustrated in FIG. 3, for example, in step S310, the vehicle 510 determines whether the first mobile terminal 530 is within a predetermined spatial range relative to the opening/closing member 512. In step S320, the vehicle 510 transmits, to the second mobile terminal 520, position confirmation information indicating that the first mobile terminal 530 is within the predetermined spatial range relative to the opening/closing member 512. When the position confirmation information is received, then in step S330, the second mobile terminal 520 starts to detect whether the second mobile terminal 520 remains stationary for a second predetermined period. In step S340, the second mobile terminal 520 transmits second stationary behavior information to the vehicle 510. In step S360, the second mobile terminal 520 continues to detect whether the second mobile terminal 520 remains stationary for a third predetermined period. In step S370, the second mobile terminal 520 transmits first stationary behavior information to the vehicle 510. Further, in step S350, as a complement and alternative to the vehicle 510 transmitting the warning signal, the warning signal may be transmitted by the first mobile terminal 530 and/or the second mobile terminal 520. In one embodiment, the warning signal may be transmitted simultaneously by the vehicle, the first mobile terminal, and the second mobile terminal.

As illustrated in FIG. 4, in step S410, the vehicle-side communication unit 513 interacts with the first mobile-side communication unit 533 to determine whether the first mobile terminal 520 is within a predetermined spatial range relative to the opening/closing member 512. If the first mobile terminal 520 is determined to be within the predetermined spatial range relative to the opening/closing member 512, then in step S420, the vehicle 510 transmits position confirmation information to the second mobile terminal 530. In step S430, the vehicle 110 continues to monitor the second stationary behavior information from the second mobile terminal 520 and receives the second stationary behavior information from the second mobile terminal 520. In step S450, the vehicle 510 continues to monitor the first stationary behavior information from the second mobile terminal 520 and receives the first stationary behavior information from the second mobile terminal 520. When the vehicle 510 does not receive the first stationary behavior information within a predetermined period, the processing returns to step S430, and then the vehicle 110 continues to monitor the second stationary behavior information from the second mobile terminal 520.

In the above method, the first mobile terminal such as a key of the vehicle can be used to determine whether the user is within the predetermined spatial range relative to the opening/closing member, and authentication can be performed for the first mobile terminal and the vehicle. At the same time, the stationary behavior of the user can also be sensed using the second mobile terminal, such as a mobile phone, carried by the user along with the key of the vehicle. In addition, information such as the first stationary behavior information and the second stationary behavior information can be transmitted to the vehicle through wireless communication between the mobile phone and the vehicle. Therefore, the above method can be implemented using the motion sensor and warning device in the mobile phone without modifying an existing key of the vehicle. Hardware improvements are reduced, and costs are also reduced.

The scope of the present disclosure should not be limited by the above described embodiments, but is limited by the appended claims and their equivalents.

## Claims

1. A method for operating an opening/closing member of a vehicle, the method comprising the steps of:
determining whether a first mobile terminal is within a predetermined spatial range relative to an opening/closing member;
determining, by a second mobile terminal, whether the second mobile terminal remains stationary for a first predetermined period based on a signal of a sensor from the second mobile terminal;
when determining that the second mobile terminal remains stationary for the first predetermined period, transmitting, by the second mobile terminal, first stationary behavior information to the vehicle; and
when the vehicle receives the first stationary behavior information from the second mobile terminal, switching the opening/closing member from a first state to a second state,
wherein the first state is one of an open state and a closed state, and the second state is the other of the open state and the closed state.

2. The method for operating according to claim 1, wherein the sensor is a motion sensor and is one selected from the group consisting of an acceleration sensor, an angular velocity sensor, and a magnetometer.

3. The method for operating according to claim 1 or 2, further comprising the steps of:
when determining that the first mobile terminal is within the predetermined spatial range relative to the opening/closing member, determining, by the second mobile terminal, whether the second mobile terminal remains stationary for a second predetermined period which is shorter than the first predetermined period based on a signal of the sensor from the second mobile terminal;
when determining that the second mobile terminal remains stationary for the second predetermined period, transmitting, by the second mobile terminal, second stationary behavior information to the vehicle; and
when the vehicle receives the second stationary behavior information, transmitting a warning signal indicating to switch the opening/closing member from the first state to the second state.

4. The method for operating according to claim 3 , wherein the warning signal is transmitted by at least one of the vehicle, the first mobile terminal, or the second mobile terminal.

5. The method for operating according to claim 3 or 4, further comprising a step of;
when the vehicle does not receive the first stationary behavior information within a predetermined period after receiving the second stationary behavior information, stopping the warning signal and maintaining the opening/closing member in the first state.

6. The method for operating according to claim 5, wherein
when the first state is the open state, the second predetermined period is a second open predetermined period,
when the first state is the closed state, the second predetermined period is a second closed predetermined period, and
the second open predetermined period is shorter than the second closed predetermined period.

7. The method for operating according to claim 5, wherein
when the first state is the open state, a difference between the first predetermined period and the second predetermined period is a third open predetermined period,
when the first state is the closed state, a difference between the first predetermined period and the second predetermined period is a third closed predetermined period, and
the third open predetermined period is shorter than the third closed predetermined period.

8. The method for operating according to any one of claims 1 to 7, wherein the first mobile terminal and the second mobile terminal are a same mobile terminal.

9. The method for operating according to claim 8, wherein the first mobile terminal and the second mobile terminal are each a mobile phone or a key for the vehicle.

10. The method for operating according to any one of claims 1 to 7, wherein the first mobile terminal and the second mobile terminal are different mobile terminals.

11. The method for operating according to claim 10, wherein
the first mobile terminal is a key of the vehicle,
the second mobile terminal is a mobile phone, and
the mobile phone wirelessly communicates with the vehicle.

12. The method for operating according to any one of claims 1 to 11, wherein the predetermined spatial range includes a spatial range of a predetermined distance from the vehicle and a spatial range inside the vehicle.

13. The method for operating according to any one of claims 1 to 12, wherein the opening/closing member includes at least one of a front door, a rear door, a trunk, and a vehicle window.

14. A vehicle comprising:
an opening/closing member and a controller,
wherein the controller is configured to:
determine whether a first mobile terminal is within a predetermined spatial range relative to the opening/closing member;
transmit, to a second mobile terminal, position confirmation information for confirming that the first mobile terminal is within the predetermined spatial range relative to the opening/closing member;
receive, from the second mobile terminal, first stationary behavior information indicating that the second mobile terminal remains stationary for a first predetermined period; and
switch the opening/closing member from a first state to a second state in response to the first stationary behavior information received from the second mobile terminal,
wherein the first state is one of an open state and a closed state, and the second state is the other of the open state and the closed state.

15. The vehicle according to claim 14, further comprising
a vehicle-side warning device,
wherein the controller is further configured to:
receive, from the second mobile terminal, second stationary behavior information indicating that the second mobile terminal remains stationary for a second predetermined period which is shorter than the first predetermined period; and
cause the vehicle-side warning device to transmit a warning signal indicating to switch the opening/closing member from the first state to the second state in response to the second stationary behavior information received from the second mobile terminal.

16. The vehicle according to claim 14 or 15, wherein the predetermined spatial range includes a spatial range of a predetermined distance from the vehicle and a spatial range inside the vehicle.

17. The vehicle according to any one of claims 14 to 16, wherein the first mobile terminal and the second mobile terminal are each one selected from among a key of the vehicle and a mobile phone.

18. The vehicle according to any one of claims 14 to 17, wherein the opening/closing member includes at least one of a front door, a rear door, a trunk, and a vehicle window.
